# EUROPÄISCHE PATENTANMELDUNG

(11) **EP 1 652 757 A2**
(43) Veröffentlichungstag der Anmeldung: **03.05.2006**
(21) Anmeldenummer: 05011966.8
(22) Anmeldetag: 03.06.2005
(51) Int. Cl.: B62D 25/16, B62D 21/15, B62D 29/04

(54) **Anordnung zum Befestigen eines Bauteils**

(30) Priorität: 29.10.2004 DE 102004052636
(71) Anmelder: REHAU AG + Co, 95111 Rehau (DE)
(72) Erfinder: Mett, Thomas, 95182 Döhlau (DE); Herrmann, Stefan, 95111 Rehau (DE)

(57) **Zusammenfassung**

Die Erfindung betrifft eine Anordnung zum beweglichen Befestigen eines Bauteils (5) mit gezielten Versagenseigenschaften, beispielsweise eine Anordnung zum Befestigen von Verkleidungsteilen eines Fahrzeugs an der Fahrzeugkarosserie. Herkömmliche Befestigungsanordnungen bestehen aus mehreren Teilen und haben einen komplexen sowie filigranen Aufbau, und können nach dem Versagen nur unter hohem Zeit- und Kostenaufwand ersetzt werden. Um die in Zusammenhang mit den herkömmlichen Befestigungsanordnungen bekannten Probleme zu lösen, stellt die Erfindung eine Anordnung zum Befestigen eines Bauteils bereit, die umfasst: ein Trägerelement (8) und ein fest mit dem Trägerelement verbundenes Halteelement (1), zumindest einen Abstandshalter (3), durch den das Trägerelement und das Halteelement voneinander beabstandet sind, wobei das Bauteil beweglich zwischen dem Trägerelement und dem Halteelement angeordnet ist und durch eine Führungseinrichtung in zumindest einer Führungsrichtung geführt wird, die bei definierter Krafteinwirkung gezielt versagt und das Bauteil freigibt, während das Halteelement fest mit dem Trägerelement verbunden bleibt.

## Beschreibung

Die Erfindung betrifft eine Anordnung zum beweglichen Befestigen eines Bauteils mit gezielten Versagenseigenschaften, beispielsweise eine Anordnung zum Befestigen von Verkleidungsteilen eines Fahrzeugs an der Fahrzeugkarosserie.

In der EP 1 072 502 B1 wird eine Befestigungsanordnung, insbesondere ein Befestigungselement mit Versagenseigenschaften beschrieben. Das Befestigungselement besteht aus zwei separaten Teilen, welche vor der Montage miteinander verbunden werden müssen. Der eine Teil dient dabei zur Befestigung an einem Trägerelement, während der andere Teil das Bauteil festhält und gleitend führt. Die Verbindung der beiden Teile erfolgt über vier als Sollbruchstelle ausgebildete Stifte, welche per Drehbewegung eine Verrastung herstellen. Das vormontierte Befestigungselement wird in eine Öffnung des Bauteils eingesetzt und eingerastet, und durch die Öffnung des Bauteils mit dem Trägerelement verschraubt. Je Befestigungspunkt des Bauteils ist ein separates Befestigungselement erforderlich. lm Schadensfall scheren die Stifte ab und das Bauteil kann aus der Fixierung ausklinken. Ein derartiges Befestigungselement wird vor allem im Automobilbereich eingesetzt, um Teile der Fahrzeugverkleidung an der Fahrzeugkarosserie zu befestigen.

Da das herkömmliche Befestigungselement in einer Öffnung des Bauteils angeordnet ist, kann ein Ausgleich der Montage- und Bauteiltoleranzen allenfalls durch erhöhtes Spiel in der Gleitführung stattfinden, was jedoch in der Praxis nicht erwünscht ist. Insgesamt ist der Toleranzausgleich dadurch stark eingeschränkt. Des Weiteren erfordert die herkömmliche Lösung eine filigrane Geometrie am zu befestigenden Bauteil, in Form der Lochbildgeometrie mit Ausklinkungen. Auch ist das Befestigungselement nach dem Abscheren der Stifte für einen weiteren Gebrauch nicht mehr einsetzbar. Allein der mehrteilige Aufbau des Befestigungselements erfordert schon hohe Herstellungskosten und einen hohen Montageaufwand, da die einzelnen Bestandteile erst vorzumontieren sind. Im Schadensfall geht zudem der gesamte obere Teil des Befestigungselements, der das Bauteil hält und führt, verloren, und der am Trägerelement verschraubte Bestandteil der Befestigungsanordnung wird durch das Abscheren der Stifte erheblich beschädigt. Das am Trägerelement zurückbleibende, beschädigte Reststück muss an sämtlichen Befestigungspunkten entfernt werden.

Für die Neumontage des abgetrennten Teils der Fahrzeugverkleidung müssen hohe Materialkosten für die zu ersetzenden Bauteile sowie ein erheblicher Zeitaufwand für den Austausch aller Befestigungselemente an sämtlichen Befestigungspunkten veranschlagt werden.

Der Erfindung liegt die Aufgabe zugrunde, die aus dem Stand der Technik bekannten Nachteile zu beseitigen und eine dahingehend verbesserte Anordnung zum Befestigen eines Bauteils bereitzustellen.

Diese Aufgabe wird gelöst durch eine Anordnung zum Befestigen eines Bauteils umfassend ein Trägerelement und ein fest mit dem Trägerelement verbundenes Halteelement, zumindest einen Abstandshalter, durch den das Trägerelement und das Halteelement voneinander beabstandet sind, wobei das Bauteil beweglich zwischen dem Trägerelement und dem Halteelement angeordnet ist und durch eine Führungseinrichtung in zumindest einer Führungsrichtung geführt wird, die bei definierter Krafteinwirkung gezielt versagt und das Bauteil freigibt, während das Halteelement fest mit dem Trägerelement verbunden bleibt. Bei erhöhter Krafteinwirkung in der Führungsebene, z.B. bei einem Fahrzeugcrash, versagt die Führungseinrichtung gezielt und gibt das Bauteil frei. Im Gegensatz zur herkömmlichen Befestigungsanordnung wird dadurch aber nicht das gesamte Befestigungselement sondern lediglich die Führungseinrichtung beschädigt, die die unmittelbare Verbindung zwischen dem Halte- bzw. Verbindungselement und dem Bauteil herstellt. Der restliche Teil der Anordnung bleibt erhalten. Daher kann das freigegebene Bauteil erneut am Trägerelement befestigt werden, wobei lediglich das einzige beschädigte Element, z.B. das Halteelement, ausgetauscht werden muss. Bei der herkömmlichen Lösung müssen alle Befestigungselemente an sämtlichen Befestigungspunkten vollständig ersetzt werden. Im Vergleich zur herkömmlichen Lösung lässt sich der Kosten- und Zeitaufwand für den erneuten Einbau des freigegebenen Bauteils erheblich reduzieren.

In einer vorteilhaften Ausführung weist die Anordnung eine Verriegelungseinrichtung auf, durch welche das Bauteil zwischen dem Trägerelement und dem Halteelement reversibel festlegbar ist. Das Bauteil wird dann im Normalfall von der Verriegelungseinrichtung in einer Neutralposition gehalten und kann zusätzlich gegenüber der Neutralposition ausgelenkt werden. Diese Anordnung wird bevorzugt, wenn ein Gleiten des Bauteils erst erwünscht ist, nachdem eine Kraft einwirkt, die groß genug ist, um die Verriegelung zu überwinden.

Es ist dabei von Vorteil, wenn die Anordnung von einem ersten Zustand, in dem das Bauteil zwischen dem Halteelement und dem Trägerelement festgelegt ist, in einen zweiten Zustand, in dem das Bauteil gegenüber dem Halteelement bzw. dem Trägerelement bewegbar ist und in zumindest einer Führungsrichtung gleitend geführt wird, reversibel überführbar ist. Im ersten Zustand der Anordnung befindet sich das Bauteil in der Normal- oder Neutralposition. Erst bei Eintritt einer bestimmten Bedingung, z.B. dem Einwirken einer definierten Kraft, überwindet das Bauteil die Verriegelung und wird gleitend geführt. Diese Ausführung eignet sich insbesondere für den Automobilbereich. Ein beliebiges Teil einer Fahrzeugverkleidung kann demnach mit Bezug auf die Fahrzeugstruktur festgelegt werden. Bei Einwirkung einer definierten Kraft auf das Bauteil im normalen Fahrbetrieb wird die Verriegelung überwunden und dadurch werden im Bauteil auftretende Kräfte begrenzt und die Bauteilfunktionsfähigkeit im Fahrbetrieb sichergestellt. Gleiches gilt auch für den Fall der Wärmeausdehnung.

Dabei ist es hilfreich, wenn die Anordnung durch definierte Einwirkung einer Kraft, die erheblich kleiner ist als die Kraft, die zum gezielten Versagen der Führungseinrichtung führt, vom ersten in den zweiten Zustand überführbar ist.

Eine besonders einfache und zuverlässige Verriegelungseinrichtung wird dadurch verwirklicht, dass die Verriegelungseinrichtung zumindest eine Rastnase und zumindest eine Rastnut aufweist.

In einer vorteilhaften Weiterbildung der erfindungsgemäßen Anordnung weist die Führungseinrichtung zumindest einen Eingriffsabschnitt und zumindest einen Aufnahmeabschnitt auf.

Die Komplexität der Führungseinrichtung kann weiter verringert werden, wenn der Eingriffsabschnitt einstückig am Halteelement oder dem Trägerelement angeformt ist. Dies wirkt sich vorteilhaft auf die Herstellungskosten der erfindungsgemäßen Befestigungsanordnung aus.

Eine besonders sichere und zuverlässige Führung lässt sich dadurch bewerkstelligen, dass das Bauteil mit dem Halteelement und/oder dem Trägerelement formschlüssig verbunden ist.

Besonders hilfreich dazu ist es, wenn der Eingriffsabschnitt einen Vorsprung umfasst, der in eine Ausnehmung des Aufnahmeabschnitts eingreift.

Die Führungseinrichtung lässt sich besonders einfach gestalten, wenn der Aufnahmeabschnitt eine Nut oder ein Langloch aufweist.

In einer besonders einfachen und kostengünstigen Variante der erfindungsgemäßen Anordnung umfasst das Halteelement einen länglichen und dünnwandigen Abschnitt.

Um die Stabilität der Befestigungsanordnung weiter zu erhöhen, ist das Halteelement an zumindest zwei Verbindungsstellen mit dem Trägerelement verbunden.

Weiterhin wird die Führung des Bauteils dadurch präzisiert und stabilisiert, dass zumindest zwei Führungseinrichtungen vorgesehen sind, die im Wesentlichen in einer Führungsrichtung des Bauteils voneinander beabstandet sind.

In einer vorteilhaften Weiterbildung der Erfindung scheren die Eingriffsabschnitte bei Einwirkung einer definierten Kraft ab.

Um die Montagefreundlichkeit der Anordnung weiter zu verbessern ist es von Vorteil, wenn das Bauteil nach dem Versagen der Führungseinrichtung in einer Richtung im Wesentlichen senkrecht zu der Führungsrichtung aus der Anordnung entfernbar ist.

Eine Anordnung, bei der das Halteelement einen flächigen Haltabschnitt und das Trägerelement einen flächigen Trägerabschnitt aufweisen, die durch den Abstandshalter voneinander beabstandet im Wesentlichen in etwa parallel gegenüberstehen und einen Spalt bilden, wobei ein dünnwandiger Abschnitt des Bauteils in den Spalt zwischen dem Halteelement und dem Trägerabschnitt hineinragt, ist für den Einsatz im Automobilbereich besonders geeignet.

Dabei ist es von Vorteil, wenn die Führungsrichtung des Bauteils im Wesentlichen parallel zu dem Halteabschnitt und/oder dem Trägerabschnitt verläuft. Insbesondere im Automobilbereich kann die Führungsrichtung des Bauteils dadurch im Wesentlichen der Fahrtrichtung des Fahrzeuges angeglichen werden.

Die Stabilität und Festigkeit der Führungseinrichtung des Bauteils wird dadurch verbessert, dass die Führungseinrichtung des Bauteils im Wesentlichen die Richtung ist, in der zwei Verbindungsstellen des Halteelements und des Trägerelements voneinander beabstandet sind.

Die Details und weitere Vorteile und Eigenschaften der vorliegenden Erfindung werden nachstehend mit Bezug auf die beiliegenden Zeichnungen beschrieben.
- Fig. 1: zeigt eine weitere Ansicht auf den Halteabschnitt des Halteelements der erfindungsgemäßen Anordnung.
- Fig. 2: zeigt eine Einbausituation des Bauteils als Explosionsdarstellung.
- Fig. 3a: zeigt eine Unteransicht des am Halteelement anliegenden Bauteils.
- Fig. 3b: zeigt eine vergrößerte Unteransicht des am Halteelement anliegenden Bauteils.

Die erfindungsgemäße Anordnung zum Befestigen eines Bauteils 5 umfasst ein Trägerelement 8 und ein fest mit dem Trägerelement 8 verbundenes Halteelement 1, zumindest einen Abstandshalter 3, durch den das Trägerelement 8 und das Halteelement 1 voneinander beabstandet sind. Das Bauteil 5 ist beweglich zwischen dem Trägerelement 8 und dem Halteelement 1 angeordnet und wird durch eine Führungseinrichtung in zumindest einer Führungsrichtung F gleitend geführt. Die Führungseinrichtung der erfindungsgemäßen Anordnung besteht aus einem am Halteelement 1 angeordneten Eingriffsabschnitt in Gestalt eines zylindrischen Stiftes 2 und einem am Bauteil 5 angebrachten Aufnahmeabschnitt in Gestalt einer Ausnehmung, einer Nut, eines Führungsdurchbruchs oder eines Langlochs 7. Die Führungseinrichtung versagt bei definierter Krafteinwirkung gezielt durch das Abscheren der Stifte 2. Das Bauteil 5 wird freigegeben, während das Halteelement 1 fest mit dem Trägerelement 8 verbunden bleibt.

Der besseren Übersicht halber sind die Bestandteile der Anordnung in den Figuren vorwiegend einzeln und nicht im Einbauzustand gezeigt.

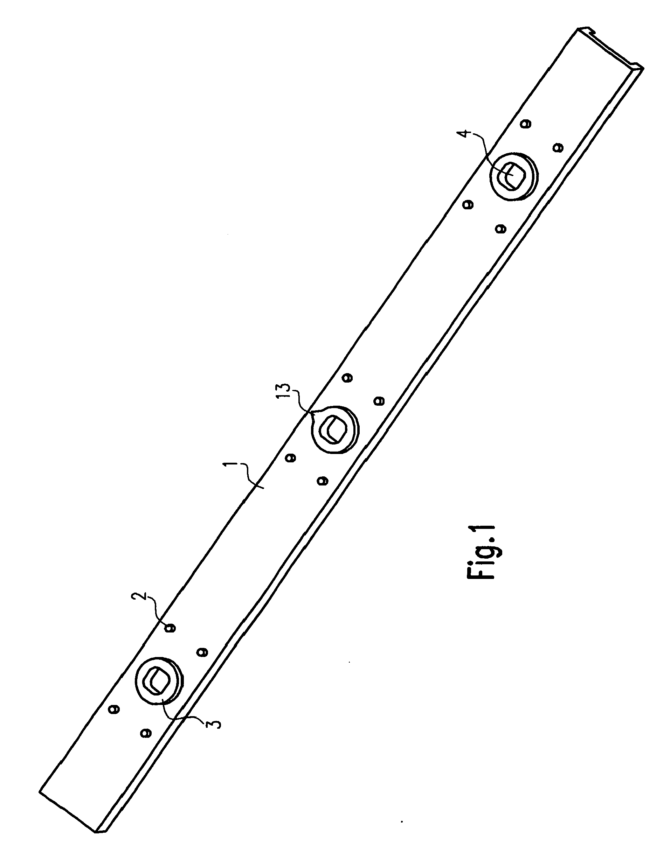

Fig. 1 zeigt das Halteelement 1 der erfindungsgemäßen Anordnung mit einer Sicht auf die Unterseite. Das Halteelement 1 ist ein flächiges, längliches Element aus Kunststoff, kann aber auch aus anderen Materialien gefertigt werden. Es wird in der in Fig. 1 gezeigten Gestalt vorzugsweise in einem Stück geformt. Randseitig stehen von der Rückseite des Halteelements 1 Ränder hervor, die dem Halteelement 1 im Querschnitt ein C-Profil und dadurch Stabilität gegen Biegung und Verdrehung verleihen. Die als Halteabschnitt bezeichnete Unterseite des Halteelements 1 wird in einer Einbausituation des Bauteils 5 in Anlage an das Bauteil 5 gebracht. An der Unterseite bzw. am Halteabschnitt sind jeweils auf halber Breite des Halteelements 1 drei Abstandshalter 3 mit mittigen Befestigungsdurchbrüchen 4 einstückig angeformt. Die Abstandshalter 3 sind in Längsrichtung des Halteelements 1 hintereinander angeordnet und gleichmäßig über dessen Länge verteilt sowie gleichmäßig voneinander beabstandet. Jeder Befestigungsdurchbruch 4 durchdringt das Material des Halteelements 1 vollständig. Die Abstandshalter 3 sind jeweils gleich hohe Bünde mit im Wesentlichen zylindrischer Außenkontur und mit in etwa dem doppelten Durchmesser der mittigen Befestigungsdurchbrüche 4. Der mittlere Abstandshalter 3 weist eine Rastnase 13 auf, die Teil einer Verriegelungseinrichtung ist, die weiter unten ausführlich beschrieben wird. Um einen Abstandshalter 3 bzw. Befestigungsdurchbruch 4 sind jeweils vier zylindrische Stifte 2 in gleichem Abstand um eine gedachte Mittelachse des Befestigungsdurchbruchs 4 angeordnet und einstückig an das Halteelement 1 angeformt. In der Längsrichtung des Halteelements 1 befinden sich jeweils zwei Stifte 2 nebeneinander auf gleicher Höhe. In der Querrichtung des Halteelements 1 sind die Stifte 2 jeweils in den äußeren, randseitigen Dritteln angeordnet.

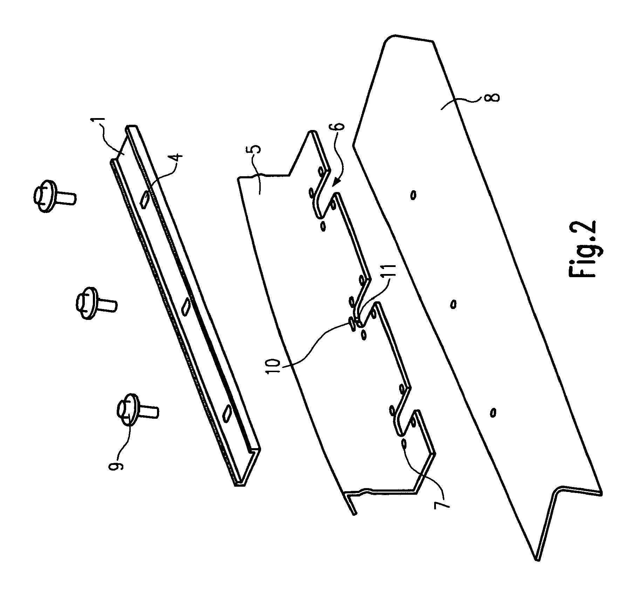

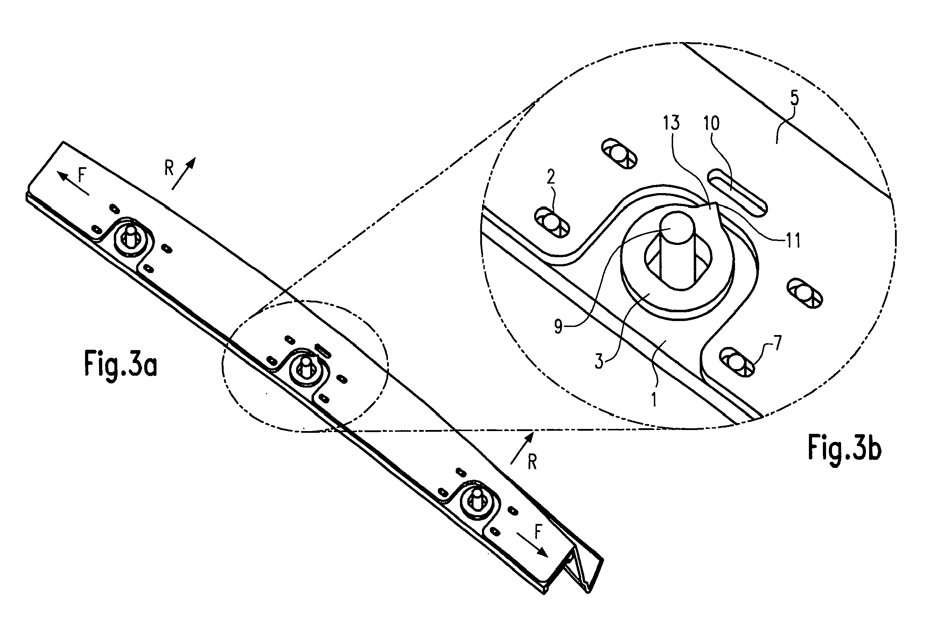

Nachstehend werden die Merkmale des in Fig. 2, 3a und 3b zu sehenden Bauteils 5 beschrieben. Das Bauteil 5 ist vorzugsweise ein Teil einer Fahrzeugverkleidung und besitzt einen dünnwandigen, länglichen und flächigen Abschnitt, der in einem Spalt zwischen dem Halteelement 1 und dem Trägerelement 8 beweglich angeordnet ist. An einer Randseite des in den Spalt ragenden Abschnitts des Bauteils 5 sind Aussparungen 6 vorgesehen, deren Position, Größe und Abstand in Abhängigkeit von Position, Größe und Abstand der Abstandshalter 3 des Halteelements 1 bestimmt wird. Die Aussparungen 6 sind dabei im Wesentlichen halbkreis- oder bogenförmig und haben größere Durchmesser als die Abstandshalter 3. Im später beschriebenen Einbauzustand der Anordnung liegen die Abstandshalter 3 jeweils innerhalb der Aussparungen 6 des Bauteils 5, wie in Fig. 3a und 3b angedeutet ist.

In der Längsrichtung des Bauteils 5 ist zwischen dem Bauteil 5 und den Abstandshaltern 3 jeweils vor und hinter den Abstandshaltern 3 Spiel vorgesehen, um ein Gleiten des Bauteils 5 über eine bestimmte Länge zu ermöglichen. In Längsrichtung des Bauteils 5, jeweils vor und hinter den Aussparungen 6, sind weitere Ausnehmungen bzw. sog. Führungsdurchbrüche 7 zur Aufnahme der zylindrischen Stifte 2 des Halteelements 1 vorgesehen und entsprechend in Übereinstimmung mit der Position der zylindrischen Stifte 2 angeordnet. Die Ausnehmungen 7 sind als Nuten oder Langlöcher ausgebildet und erstrecken sich im Wesentlichen in Längsrichtung des länglichen, flächigen Abschnitts des Bauteils 5. Jede Ausnehmung 7 ist Bestandteil der Führungseinrichtung, die weiter unten ausführlich beschrieben wird. Das Bauteil 5 weist am Innenrand der mittleren Aussparung 6 mittig eine Auskerbung 11 auf, die von einem Langloch 10 hinterlegt ist. Die Auskerbung 11 ist ebenso wie die Rastnase 13 an dem mittleren Abstandshalter 3 des Halteelements 1 ein Bestandteil der Verriegelungseinrichtung, die weiter unten ausführlich beschrieben wird.

Eine Führungseinrichtung im Sinne der Erfindung umfasst einen zylindrischen Stift bzw. einen Eingriffsabschnitt 2 auf Seiten des Halteelements 1 und eine Ausnehmung 7 auf Seiten des Bauteils 5, wobei der Eingriffsabschnitt und der Aufnahmeabschnitt miteinander in Eingriff stehen. Über die Stifte 2 wird das Halteelement mit den am Bauteil 5 entsprechend vorgesehenen Ausnehmungen 7 formschlüssig in Eingriff gebracht. Die Breite jeder dieser Ausnehmungen 7 ist geringfügig größer als die Durchmesser der zylindrischen Stifte 2, um diese gleitend darin aufzunehmen und in Führungsrichtung F gleitend zu führen. Die Führungsrichtung F bestimmt sich durch die Ausrichtung der Ausnehmungen 7. Die Länge der Ausnehmungen 7 kann im Rahmen der gegebenen Geometrie beliebig variiert werden, um der Anordnung ausreichend Spiel zu verleihen. Die Ränder der Ausnehmungen 7 sind vorzugsweise scharfkantig, um die Stifte 2 bei entsprechender Beanspruchung abscheren zu können. Insbesondere ist das Material des Bauteils 5 im Bereich der Ausnehmungen 7 härter als das Material der Stifte 2, um Beschädigungen am Bauteil 5 im Bereich der Ausnehmungen 7 auch bei starker Beanspruchung der Führungseinrichtung zu vermeiden. In der Normal- oder Neutralposition der Anordnung liegen die Stifte 2 jeweils mittig in den Ausnehmungen 7.

Die Verriegelungseinrichtung der Anordnung ist in Fig. 3b zu sehen. Sie umfasst die Rastnase 13 an dem mittleren Abstandshalter 3 des Halteelements 1 und die von dem Langloch 10 hinterlegte Auskerbung 11 am Bauteil 5. Die Rastnase 13 erstreckt sich zackenförmig vom Umfang des mittleren Abstandshalters 3 radial nach außen und zeigt in etwa senkrecht zur Längsrichtung des Halteelements 1 zum eingesetzten Bauteil 5.

Der Rücken der Rastnase 13 erstreckt sich senkrecht zur Vorderseite der Halteelements 1 und passt genau in die Rastnut bzw. Auskerbung 11, die mittig in der Aussparung 6 am Rand des Bauteils 5 vorgesehen ist. Die Auskerbung 11 des Bauteils 5 ist von einem Langloch 10 hinterlegt, um dem Abschnitt des Bauteils 5 im Bereich der Auskerbung 11 federnde Eigenschaften zu verleihen. Das Langloch 10 verläuft parallel zu den Ausnehmungen 7 in Längsrichtung des Bauteils 5 und kann in Länge und Breite variiert werden, um die Federeigenschaften des gekerbten Abschnitts des Bauteils 5 zu bestimmen. In der gezeigten Variante entspricht die Länge des Langlochs 10 in etwa dem Durchmesser des Abstandshalters 3, und die Breite des Langlochs 10 in etwa der Breite des zwischen dem Langloch 10 und dem Rand der Aussparung 6 gebildeten Stegs. In der Normal- oder Neutralposition der Anordnung ist die Rastnase 13 in der Auskerbung 11 verrastet und das Bauteil 5 ist zwischen dem Halteelement 1 und dem Trägerelement 8 festgelegt.

Nachstehend werden die Merkmale des in Fig. 2 zu sehenden Trägerelements 8 beschrieben. Das Trägerelement 8 ist ein längliches, flaches Bauteil, vorzugsweise ein dünnwandiges Kunststoff- oder Metallbauteil mit im Wesentlichen einem L-Profil, und weist in Längsrichtung eine Vielzahl von Bohrungen auf. Die Bohrungen sind auf die Befestigungsdurchbrüche 4 des Halteelements 1 abgestimmt, sind gleichmäßig voneinander beabstandet und liegen im Wesentlichen auf einer Linie; die Anzahl und Lage der Bohrungen werden von der Befestigungsbegebenheit des Bauteils 5 und dem verfügbaren Bauraum / der Einbausituation bestimmt. Die Bohrungen sind mit Innengewinden versehen, um die Schraubenbolzen 9 darin aufzunehmen. Das Trägerelement 8 ist vorzugsweise ein Element der Fahrzeugstruktur bzw. Karosserie.

Nachstehend wird die Verbindung zwischen dem Halteelement 1 und dem Trägerelement 8 mit Bezug auf Fig. 2 beschieben. Im Montage- bzw. Einbauzustand der Anordnung sind das Halteelement 1 und das Trägerelement 8 durch die Schraubenbolzen 9 verbunden. Die zugewandten Seiten des Halteelements 1 und des Trägerelements 8 werden durch die Abstandshalter 3 beabstandet und parallel zueinander ausgerichtet. Zwischen dem Halteelement 1 und dem Trägerelement 8 bildet sich ein Spalt, in dem das Bauteil 5 beweglich angeordnet wird.

Nachstehend wird mit Bezug auf die Fig. 3a und 3b die Verbindung zwischen dem Halteelement 1 und dem Bauteil 5 beschrieben. Im Montage- bzw. Einbauzustand der Anordnung ist das Bauteil 5 im Spalt zwischen dem Halteelement 1 und dem Trägerelement 8 angeordnet.

Über die oben beschriebenen Führungs- und Verriegelungseinrichtungen ist das Halteelement 1 mit dem Bauteil 5 verbunden. Alternativ oder zusätzlich können zwischen dem Trägerelement 8 und dem Bauteil 5 Führungs- und/oder Verriegelungseinrichtungen vorgesehen sein.

Die bevorzugte Montage und bevorzugte Anwendung der erfindungsgemäßen Anordnung zum Befestigen eines Bauteils wird nachstehend mit Bezug auf die beiliegenden Zeichnungen ausführlich beschrieben.

Bei der Montage der Anordnung wird die mit den zylindrischen Stiften 2 versehene Unterseite des Halteelements 1 mit dem Bauteil 5 in Verbindung gebracht, so dass die Abstandshalter 3 des Halteelements 1 in den Aussparungen 6 des Bauteils 5 liegen. Die Schraubenbolzen 9 werden von der Rückseite des Halteelements 1 durch die Befestigungsdurchbrüche 4 des Halteelements 1 gesteckt. Der Durchmesser des Schraubenbolzens 9 ist deutlich kleiner als der Durchmesser des Befestigungsdurchbruchs 4, wodurch auftretende Montagetoleranzen ausgeglichen werden. Fig. 3a zeigt einen Vormontagezustand der Anordnung in einer Ansicht auf das bereits mit dem Halteelement 1 zusammengefügte Bauteil 5. Die Gewindeabschnitte der Schraubenbolzen 9 ragen durch die Befestigungsdurchbrüche 4 des Halteelements 1 hindurch. Fig. 3b zeigt eine vergrößerte Ansicht einer Verbindungsstelle, an der das Halteelement 1 und das Trägerelement 8 verbunden werden. Dort ist die Normal- oder Neutralposition der Anordnung angedeutet, in der die zylindrischen Stifte 2 jeweils mittig in den Langlöchern 7 angeordnet sind. Der Rücken der Rastnase 13 greift dabei in die Auskerbung 11 des Bauteils 5 ein, wodurch das Bauteil 5 gegenüber dem Halteelement 1 festgelegt ist. Danach werden die Schraubenbolzen 9 in den vorgesehenen Bohrungen im Trägerelement 8 verschraubt, während das Bauteil 5 gegenüber dem Halteelement 1 weiterhin so ausgerichtet wird, dass die zylindrischen Stifte 2 mittig in den Langlöcher 7 des Bauteils 5 angeordnet sind.

Der Zustand der montierten Anordnung, in dem das Bauteil 5 gegenüber dem Halteelement 1 und dem Befestigungselement 8 festgelegt und verriegelt ist, wird auch als erster Zustand bezeichnet. Bei definierter Krafteinwirkung in Führungsrichtung, z.B. hervorgerufen durch Wärmeausdehnung oder bei einem Crash mit niedriger Geschwindigkeit, wird die Anordnung vom ersten Zustand in einen zweiten Zustand, in dem das Bauteil zwischen dem Halteelement 1 und dem Trägerelement 8 gleitend geführt wird, reversibel überführt.

Dies geschieht dadurch, dass der Rücken der Rastnase 13 aus der Auskerbung 11 rutscht und an der Innenseite der Aussparung 6 des Bauteils 5 entlang gleitet. Der vom Langloch 10 hinterlegte, federnde Abschnitt bzw. Steg des Bauteils 5 wird dabei geringfügig verformt und in Richtung des Langlochs 10 gedrückt. Bei einer entsprechenden Bewegung des Bauteils 5 kann die Anordnung wieder vom zweiten in den ersten Zustand überführt werden. Die Verriegelungseinrichtung ist demnach vom ersten in den zweiten Zustand reversibel überführbar, d.h. das Bauteil 5 kann zwischen dem Halteelement 1 und dem Trägerelement 8 reversibel festgelegt werden. Bei einer erheblichen Krafteinwirkung in der Führungsebene, d.h. in Führungsrichtung F oder quer dazu, werden die zylindrischen Stifte bzw. Eingriffsabschnitte 2 derart beansprucht, dass sie an den scharfkantigen Rändern der Ausnehmungen 7 abscheren. Diese Kraft muss jedoch erheblich größer sein als die Kraft, um die Anordnung vom ersten in den zweiten Zustand zu überführen. Infolge dessen wird das Bauteil 5 freigeben und kann in einer Richtung R senkrecht zur Führungsrichtung F seitlich aus der Anordnung entnommen werden. Das Halteelement 1 bleibt mit dem Trägerelement 8 durch die Schraubenbolzen 9 verbunden, auch wenn das Bauteil 5 nach dem Abscheren der Stifte 2 freigegeben wird. Durch die Auswahl der Materialien sowie durch Dimensionierung der Stifte 2 kann die erforderliche Kraft für das Versagen der Führungseinrichtung bestimmt werden. Insbesondere kann die erforderliche Kraftrichtung durch die Positionierung der Befestigungsanordnung festgelegt werden.

Die Führungseinrichtung der erfindungsgemäßen Anordnung versagt gezielt durch das Abscheren der Eingriffsabschnitte 2. Allein das Halteelement 1 wird beschädigt und muss zur Neumontage des Bauteils 5 ausgetauscht werden, unabhängig von der Anzahl der Befestigungspunkte bzw. Verbindungsstellen zwischen dem Halteelement 1 und dem Trägerelement 8. Bei der Neumontage des Bauteils 5 wird in der oben beschriebenen Weise vorgegangen.

## Patentansprüche

1. Anordnung zum Befestigen eines Bauteils (5) umfassend:
ein Trägerelement (8) und
ein fest mit dem Trägerelement (8) verbundenes Halteelement (1),
zumindest einen Abstandshalter (3), durch den das Trägerelement (8) und das Halteelement (1) voneinander beabstandet sind,
wobei das Bauteil (5) beweglich zwischen dem Trägerelement (8) und dem Halteelement (1) angeordnet ist und durch eine Führungseinrichtung in zumindest einer Führungsrichtung (F) geführt wird, die bei definierter Krafteinwirkung gezielt versagt und das Bauteil (5) freigibt, während das Halteelement (1) fest mit dem Trägerelement (8) verbunden bleibt.

2. Anordnung nach Anspruch 1,
**dadurch gekennzeichnet,**
**dass** eine Verriegelungseinrichtung vorgesehen ist, durch welche das Bauteil (5) zwischen dem Trägerelement (8) und dem Halteelement (1) reversibel festlegbar ist.

3. Anordnung nach Anspruch 2, **dadurch gekennzeichnet, dass** die Anordnung von einem ersten Zustand, in dem das Bauteil (5) zwischen dem Halteelement (1) und dem Trägerelement (8) festgelegt ist, in einen zweiten Zustand, in dem das Bauteil (5) gegenüber dem Halteelement (1) bzw. dem Trägerelement (8) bewegbar ist und in zumindest einer Führungsrichtung (F) gleitend geführt wird, reversibel überführbar ist.

4. Anordnung nach zumindest einem der vorangegangenen Ansprüche, **dadurch gekennzeichnet, dass** die Anordnung durch definierte Einwirkung einer Kraft, die kleiner ist als die Kraft, bei der die Führungseinrichtung gezielt versagt, vom ersten in den zweiten Zustand überführbar ist.

5. Anordnung nach zumindest einem der vorangegangenen Ansprüche, **dadurch gekennzeichnet, dass** die Verriegelungseinrichtung zumindest eine Rastnase (13) und zumindest eine Rastnut (11) aufweist.

6. Anordnung nach zumindest einem der vorangegangenen Ansprüche, **dadurch gekennzeichnet, dass** die Führungseinrichtung wenigstens einen Eingriffsabschnitt (2) und wenigstens einen Aufnahmeabschnitt (7) umfasst, die miteinander in Eingriff stehen.

7. Anordnung nach zumindest einem der vorangegangenen Ansprüche, **dadurch gekennzeichnet, dass** der Eingriffsabschnitt (2) einstückig am Halteelement (1) oder dem Trägerelement (8) angeformt ist.

8. Anordnung nach zumindest einem der vorangegangenen Ansprüche, **dadurch gekennzeichnet, dass** das Bauteil (5) mit dem Halteelement (1) und/oder dem Trägerelement (8) formschlüssig verbunden ist.

9. Anordnung nach zumindest einem der vorangegangenen Ansprüche, **dadurch gekennzeichnet, dass** der Eingriffsabschnitt (2) einen Vorsprung umfasst, der in eine Ausnehmung (7) des Aufnahmeabschnitts eingreift.

10. Anordnung nach zumindest einem der vorangegangenen Ansprüche, **dadurch gekennzeichnet, dass** der Aufnahmeabschnitt eine Nut oder ein Langloch (7) aufweist.

11. Anordnung nach zumindest einem der vorangegangenen Ansprüche, **dadurch gekennzeichnet, dass** das Halteelement (1) einen länglichen und dünnwandigen Abschnitt umfasst.

12. Anordnung nach zumindest einem der vorangegangenen Ansprüche, **dadurch gekennzeichnet, dass** das Halteelement (1) an zumindest zwei Verbindungsstellen mit dem Trägerelement (8) verbunden ist.

13. Anordnung nach zumindest einem der vorangegangenen Ansprüche, **dadurch gekennzeichnet, dass** zumindest zwei Führungseinrichtungen vorgesehen sind, die im Wesentlichen in einer Führungsrichtung (F) des Bauteils (5) voneinander beabstandet sind.

14. Anordnung nach zumindest einem der vorangegangenen Ansprüche, **dadurch gekennzeichnet, dass** die Eingriffsabschnitte (2) bei Einwirkung einer definierten Kraft abscheren.

15. Anordnung nach zumindest einem der vorangegangenen Ansprüche, **dadurch gekennzeichnet, dass** das Bauteil (5) nach dem Versagen der Führungseinrichtung in einer Richtung (R) im Wesentlichen senkrecht zu einer Führungsrichtung (F) aus der Anordnung entfernbar ist.

16. Anordnung nach zumindest einem der vorangegangenen Ansprüche, **dadurch gekennzeichnet, dass** das Halteelement (1) einen flächigen Halteabschnitt und das Trägerelement (8) einen flächigen Trägerabschnitt aufweisen, die durch den Abstandshalter (3) voneinander beabstandet im Wesentlichen in etwa parallel gegenüberstehen und einen Spalt bilden, wobei ein dünnwandiger Abschnitt des Bauteils (5) in den Spalt zwischen dem Halteabschnitt und dem Trägerabschnitt hineinragt.

17. Anordnung nach zumindest einem der vorangegangenen Ansprüche, **dadurch gekennzeichnet, dass** die Führungsrichtung (F) des Bauteils (5) im Wesentlichen parallel zu dem Halteabschnitt und dem Trägerabschnitt verläuft.

18. Anordnung nach zumindest einem der vorangegangenen Ansprüche, **dadurch gekennzeichnet, dass** die Führungsrichtung (F) des Bauteils (5) im Wesentlichen die Richtung ist, in der zwei Verbindungsstellen des Halteelements (1) und des Trägerelements (8) voneinander beabstandet sind.
